# FASCICULE DE BREVET EUROPEEN

(11) **EP 3 075 058 B1**
(45) Date de publication et mention de la délivrance du brevet: **11.03.2020**
(21) Numéro de dépôt: 14821755.7
(22) Date de dépôt: 28.11.2014
(51) Int. Cl.: H02J 7/00, B60L 58/22

(54) **DISPOSITIF D'ÉQUILIBRAGE DE CHARGE DES ÉLÉMENTS D'UNE BATTERIE DE PUISSANCE**
VORRICHTUNG ZUM AUSWUCHTEN DER LAST EINES HOCHLEISTUNGSBATTERIEELEMENTS
DEVICE FOR BALANCING A POWER BATTERY ELEMENT LOAD

(30) Priorité: 29.11.2013 FR 1361819
(43) Date de publication de la demande: 05.10.2016
(73) Titulaire: COMMISSARIAT À L'ÉNERGIE ATOMIQUE ET AUX ÉNERGIES ALTERNATIVES, 75015 Paris (FR); Renault S.A.S., 92100 Boulogne-Billancourt (FR)
(72) Inventeur: GARNIER, Laurent, F-69970 Marennes (FR); CHATROUX, Daniel, F-38470 Teche (FR); LUCEA, Marc, F-92100 Boulogne-Billancourt (FR); ORY, Pierre-Emmanuel, F-38000 Grenoble (FR)
(74) Mandataire: GIE Innovation Competence Group
(86) Numéro de dépôt international: PCT/FR2014/053087
(87) Numéro de publication internationale: WO 2015/079188

(56) Documents cités:
- EP-A2- 2 276 140
- WO-A1-2013/171416
- KR-A- 20070 111 587
- US-A- 5 666 041

## Description

L'invention concerne un dispositif d'équilibrage de charge pour batterie de puissance à accumulateurs électrochimiques.

Les systèmes électriques de forte puissance à tension continue connaissent un développement important. En effet, de nombreux systèmes de transport incluent une alimentation de tension continue.

Les véhicules hybrides combustion/électrique ou électriques incluent notamment des batteries de forte puissance. De telles batteries sont utilisées pour entraîner un moteur électrique à courant alternatif par l'intermédiaire d'un onduleur. Les niveaux de tension nécessaires pour de tels moteurs atteignent plusieurs centaines de Volts, typiquement de l'ordre de 400 Volts. De telles batteries comportent également une forte capacité afin de favoriser l'autonomie du véhicule en mode électrique.

Pour obtenir de fortes puissances et capacités, on place plusieurs groupes d'accumulateurs en série. Le nombre d'étages (nombre de groupes d'accumulateurs) et le nombre d'accumulateurs en parallèle dans chaque étage varient en fonction de la tension, du courant et de la capacité souhaités pour la batterie. L'association de plusieurs accumulateurs est appelée une batterie d'accumulateurs. Les accumulateurs électrochimiques utilisés pour de tels véhicules sont généralement du type lithium ion pour leur capacité à stocker une énergie importante avec un poids et un volume contenus. Les technologies de batterie de type Lithium ion phosphate de fer LiFePO4 font l'objet d'importants développements du fait d'un niveau de sécurité intrinsèque élevé, au détriment d'une densité de stockage d'énergie un peu en retrait. Un accumulateur électrochimique a habituellement une tension nominale de l'ordre de grandeur suivant :
3.3 V pour une technologie lithium-ion phosphate de Fer, LiFePO4,
4.2 V pour une technologie de type lithium-ion à base d'oxyde de cobalt. L'invention peut également s'appliquer à des super-condensateurs.

La charge ou décharge d'un accumulateur se traduit respectivement par une croissance ou décroissance de la tension à ses bornes. On considère un accumulateur chargé ou déchargé lorsque celui-ci a atteint un niveau de tension défini par son processus électrochimique. Dans un circuit utilisant plusieurs étages d'accumulateur(s), le courant circulant à travers les étages est le même. Le niveau de charge ou de décharge des étages dépend donc des caractéristiques intrinsèques des accumulateurs. Des différences de tension entre les étages apparaissent en cours de charge ou de décharge du fait des disparités de fabrication, de vieillissement, d'assemblage et de température de fonctionnement entre les différents accumulateurs.

Pour un accumulateur de technologie Li-ion, une tension trop élevée ou trop faible, dite tension de seuil, peut endommager ou détruire ce dernier. Pour exemple, la surcharge d'un accumulateur Li-ion à base d'oxyde de cobalt, peut entraîner son emballement thermique et un départ de feu. Pour un accumulateur Li-ion à base de phosphate de fer, une surcharge se traduit par une décomposition de l'électrolyte qui diminue sa durée de vie ou le détériore. Une décharge trop profonde qui amène à une tension inférieure à 2 V, par exemple, entraîne principalement une oxydation du collecteur de courant de l'électrode négative lorsque celui-ci est en cuivre et donc une détérioration de l'accumulateur. En conséquence, la surveillance des tensions aux bornes de chaque étage d'accumulateur(s) est obligatoire lors de la charge et de la décharge pour une question de sécurité et de fiabilité. Un dispositif de surveillance est ainsi généralement disposé en parallèle de chaque étage et permet d'assurer cette fonction.

Le dispositif de surveillance a pour fonction de suivre l'état de charge (ou la charge résiduelle) et décharge de chaque étage d'accumulateur(s) et de transmettre l'information au circuit de contrôle afin d'arrêter la charge ou la décharge de la batterie lorsqu'un étage a atteint sa tension de seuil. Cependant, sur une batterie avec plusieurs étages d'accumulateur(s) disposés en série, si la charge est arrêtée lorsque l'étage le plus chargé atteint sa tension de seuil, les autres étages peuvent ne pas être totalement chargés. Inversement, si la décharge est arrêtée lorsque l'étage le plus déchargé atteint sa tension de seuil, les autres étages peuvent ne pas être totalement déchargés. La capacité de chaque étage d'accumulateur(s) n'est dès lors pas exploitée, ce qui représente un problème majeur dans des applications de types transport, avec batteries embarquées ayant de fortes contraintes d'autonomie. La capacité utile de la batterie est en effet réduite par l'interruption de la décharge de la batterie, alors que des étages ne sont pas encore complètement déchargés. Indirectement, le coût du kWh utile augmente, ainsi que la masse et le volume du pack. Pour palier ce problème, le dispositif de surveillance est généralement associé à un dispositif d'équilibrage de charge.

Le dispositif d'équilibrage a pour fonction d'optimiser la charge de la batterie et donc son autonomie en amenant les étages d'accumulateur(s) mis en série à un état de charge et/ou décharge identique. Il existe deux catégories de dispositifs d'équilibrage, les dispositifs d'équilibrage dits à dissipation d'énergie, ou dits à transfert d'énergie.

Avec les systèmes d'équilibrage à dissipation d'énergie, la tension aux bornes des étages est uniformisée en détournant tout ou partie du courant de charge d'un ou des étages ayant atteint la tension de seuil et en dissipant l'énergie dans une résistance. En variante, la tension aux bornes des étages est uniformisée en déchargeant un ou des étages ayant atteint la tension de seuil haute.

Cependant, de tels systèmes d'équilibrage à dissipation d'énergie présentent l'inconvénient majeur de consommer plus d'énergie que nécessaire pour charger la batterie. En effet, il faut décharger plusieurs accumulateurs ou dériver le courant de charge de plusieurs accumulateurs pour que le ou les derniers accumulateurs un peu moins chargés terminent leur charge. L'énergie dissipée peut donc être très supérieure à l'énergie de la ou des charges, restant à réaliser. De plus, ils dissipent l'énergie excédentaire en chaleur, ce qui n'est pas compatible avec les contraintes d'intégration dans les applications de types transport et embarquées, et ce qui induit une forte baisse de la durée de vie des accumulateurs lorsque la température s'élève.

Les systèmes d'équilibrage à transfert d'énergie échangent quand à eux de l'énergie entre étages d'accumulateurs, ou avec un réseau auxiliaire d'énergie. Le temps d'équilibrage est un facteur prépondérant pour l'efficacité de l'équilibrage. Par conséquent, une puissance de charge relativement importante peut être recherchée.

Le transfert d'énergie peut s'effectuer soit de manière unidirectionnelle, de la batterie aux étages ou des étages à la batterie, ou soit de manière bidirectionnelle de la batterie aux étages et des étages à la batterie ou d'étage à étage adjacents.

Le document WO2011095608 décrit un exemple de dispositif d'équilibrage de charge pour une batterie. Dans cet exemple, le dispositif d'équilibrage de charge comporte un convertisseur unidirectionnel à plusieurs sorties. Le convertisseur comporte un dispositif de charge dédié pour chacune de ses sorties. Chaque étage peut ainsi être chargé indépendamment lors de l'équilibrage. Le convertisseur comporte en outre un générateur de tension recevant une tension de batterie auxiliaire sur son entrée et appliquant sa tension de sortie sur chaque dispositif de charge dédié. Le générateur de tension comprend notamment un pont complet à quatre interrupteurs, dont la tension est appliquée sur le primaire d'un transformateur. Le secondaire du transformateur est connecté pour appliquer sa tension sur l'entrée de chaque dispositif de charge. Le courant d'équilibrage d'un étage est principalement limité par le dimensionnement des composants de son dispositif de charge.

Un tel dispositif d'équilibrage de charge présente cependant des inconvénients. Ce dispositif présente notamment une puissance de charge assez limitée et est donc inadapté lorsqu'un déséquilibre important existe entre les étages. En effet, la puissance électrique appliquée au primaire du transformateur est répartie sur plusieurs dispositifs de charge.

Par ailleurs, l'obtention de l'état de charge de chaque étage nécessite une mesure précise de l'énergie de charge fournie par chaque dispositif de charge et nécessite des mesures de courant et de tension au secondaire du transformateur. De telles mesures induisent un surcoût pour le dispositif d'équilibrage, difficilement compatible avec la plupart des applications.

Le document US20010115436 décrit un autre exemple de dispositif d'équilibrage de charge pour une batterie. Les charges ou décharges des différents étages sont ici réalisées de façon séquentielle. Le dispositif d'équilibrage de charge comporte un convertisseur bidirectionnel isolé. Le convertisseur bidirectionnel comporte une matrice de transistors, de sorte que la tension et le courant de charge ne sont appliqués sélectivement que sur un unique étage en simultané. Le convertisseur comprend en outre un transformateur dont le primaire est alimenté par une batterie auxiliaire et dont le secondaire est connecté à l'entrée de la matrice des transistors.

Un tel dispositif d'équilibrage de charge présente également des inconvénients. Pour un déséquilibre relativement uniforme, le temps d'équilibrage est assez long, du fait de la puissance de charge relativement réduite et du nombre d'étages à équilibrer. Si le convertisseur est dimensionné pour fournir un courant de charge plus élevé, les pertes par effet Joule deviennent alors trop importantes. Ce dispositif présente un coût important et un rendement électrique assez faible surtout lorsque la tension des étages est relativement basse (ou alors nécessite des composants encore plus coûteux).

Le document WO2013171416 décrit un dispositif d'équilibrage de charge d'un dispositif de stockage d'énergie électrique de puissance selon le préambule de la revendication 1.

L'invention vise à résoudre un ou plusieurs de ces inconvénients.

L'invention porte ainsi sur un dispositif d'équilibrage de charge d'un dispositif de stockage d'énergie électrique de puissance, tel que défini dans les revendications annexées.

D'autres caractéristiques et avantages de l'invention ressortiront clairement de la description qui en est faite ci-après, à titre indicatif et nullement limitatif, en référence aux dessins annexés, dans lesquels :
- la figure 1 est une représentation schématique d'un exemple de système d'alimentation électrique incluant un dispositif d'équilibrage de charge mettant en œuvre l'invention ;
- la figure 2 illustre un exemple d'étage d'accumulateurs d'un système d'alimentation électrique pouvant faire l'objet d'un équilibrage de charge ;
- la figure 3 est une représentation schématique d'un dispositif d'équilibrage de charge ;
- la figure 4 est un schéma électrique d'un exemple de convertisseur continu/alternatif du dispositif d'équilibrage de charge ;
- la figure 5 est un schéma électrique d'un exemple de convertisseur alternatif/continu du dispositif d'équilibrage de charge ;
- la figure 6 est un diagramme comparant la puissance fournie par différents dispositifs d'équilibrage de charge en fonction du nombre d'éléments de stockage chargés en simultané ;
- la figure 7 est un schéma électrique d'une variante d'un circuit redresseur à redressement synchrone du convertisseur alternatif/continu ;
- la figure 8 est un schéma électrique d'une première variante d'un circuit redresseur connecté à un secondaire à point milieu ;
- la figure 9 est un schéma électrique d'une deuxième variante d'un circuit redresseur connecté à un secondaire à point milieu ;
- la figure 10 est un schéma électrique d'une troisième variante d'un circuit redresseur connecté à un secondaire à point milieu ;
- la figure 11 est un schéma électrique d'une autre variante d'un circuit redresseur à sélection par relais ;
- la figure 12 est un schéma électrique détaillant les inductances du côté d'un convertisseur alternatif/continu.

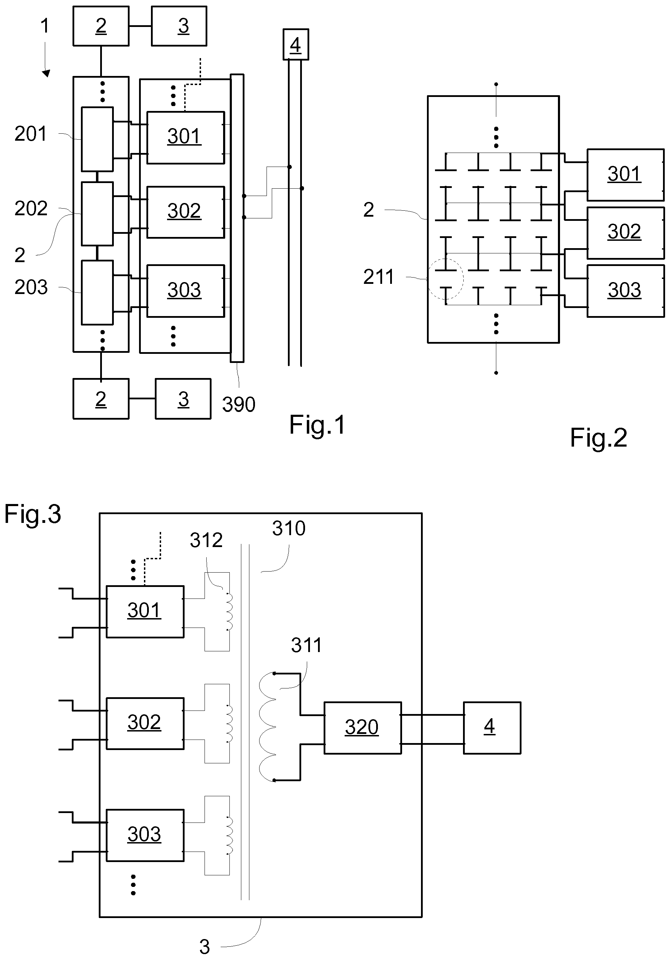

La figure 1 est une représentation schématique d'un exemple de système d'alimentation électrique 1. Le système d'alimentation électrique 1 comprend d'une part un système de stockage d'énergie électrique sous forme de batteries 2 de puissance connectées en série. Chaque batterie 2 comprend plusieurs étages connectés en série entre ses bornes. Une batterie 2 illustrée à la figure 1 comporte notamment des étages 201, 202 et 203 connectés en série. La tension entre la borne positive et la borne négative du système de stockage d'énergie électrique (aux bornes de l'ensemble des batteries 2 connectées en série) est typiquement comprise entre 100 V et 750 V, par exemple de l'ordre de 400 V. Le système de stockage d'énergie électrique est par exemple destiné à alimenter une charge électrique (non illustrée) telle que le moteur d'un véhicule hybride ou électrique en étant connectée aux bornes d'un onduleur, et est avantageusement isolée du châssis métallique d'un tel véhicule. Comme illustré à la figure 2, chaque batterie 2 peut inclure une pluralité d'accumulateurs électrochimiques 211 connectés en parallèle dans plusieurs branches et/ou connectés en série dans plusieurs étages.

D'autre part, le système d'alimentation électrique 1 comprend un dispositif d'équilibrage de charge 3 pour chaque batterie 2, de type à transfert d'énergie. Le dispositif d'équilibrage de charge 3 détaillé comprend une interface de connexion configurée pour être connectée aux bornes de chacun des étages de la batterie 2. Le dispositif d'équilibrage de charge 3 comprend aussi une interface de connexion 390 configurée pour être connectée à une source de tension continue, par exemple par l'intermédiaire d'un réseau auxiliaire 4, par exemple un réseau électrique de bord d'un véhicule, dont la tension est généralement régulée à une valeur proche de 12 V. Cette tension régulée peut par exemple varier dans une plage comprise entre 10,5 V et 14 V, en utilisant généralement une batterie auxiliaire, un supercondensateur ou un condensateur connecté à ce réseau de bord 4. Cette tension régulée du réseau 4 est inférieure à la tension aux bornes de la batterie 2 (par exemple au moins cinq fois inférieure). Des charges auxiliaires sont usuellement connectées au réseau auxiliaire 4.

Le dispositif d'équilibrage 3 comporte plusieurs convertisseurs alternatif/continu, la sortie de chacun de ces convertisseurs étant connectée à un étage respectif. En l'occurrence, les convertisseurs 301 à 303 ont leur sortie respective connectée aux bornes respectivement des étages 201 à 203. Les convertisseurs 301 à 303 sont avantageusement destinés à assurer l'équilibrage des étages 201 à 203 de la batterie 2 (et ainsi optimiser la charge de cette batterie de puissance 2)

Plus précisément, dans l'exemple illustré en référence à la figure 3, le dispositif d'équilibrage de charge 3 comporte :
- un transformateur 310 ;
- un convertisseur continu/alternatif 320 dont l'entrée est connectée au réseau de bord 4, et dont la sortie est connectée au primaire 311 du transformateur 310 ;
- les convertisseurs alternatif/continu 301 à 303 dont les sorties sont destinées à être connectées respectivement aux étages 201 à 203, et dont les entrées sont connectées à des sorties 312 respectives du secondaire du transformateur 310 ;
- un circuit de commande détaillé ultérieurement.

Du fait de l'utilisation d'un transformateur 310, les convertisseurs 301 à 303 sont isolés par rapport au réseau de bord 4 et par rapport au convertisseur continu/alternatif 320. Le secondaire du transformateur 310 comprend des enroulements secondaires indépendants et dédiés à des convertisseurs 301 à 303 respectifs. Ainsi, les convertisseurs 301 à 303 sont isolés les uns des autres. Le transformateur 310 permet également de façon connue en soi d'adapter le niveau de tension appliqué à l'entrée de chacun des convertisseurs 301 à 303.

Le dispositif d'équilibrage de charge 3 a notamment pour fonction de transférer de l'énergie entre un réseau de bord 4 et plusieurs (voire un grand nombre) étages de la batterie 2. Ainsi, le transformateur 310 réalise un transformateur entre le primaire 311 et un grand nombre d'enroulements secondaires, dédiés à des convertisseurs alternatif/continu respectifs (et donc dédiés à des étages respectifs).

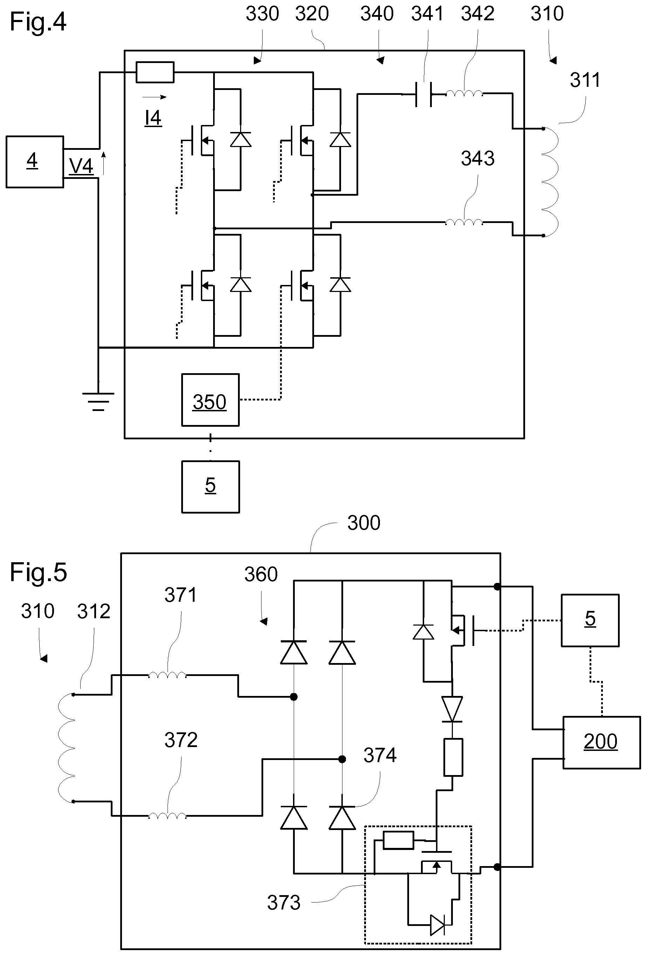

La figure 4 est un schéma électrique d'un exemple de convertisseur continu/alternatif 320 du dispositif d'équilibrage de charge 3. Le réseau auxiliaire 4 est connecté à l'entrée du convertisseur continu/alternatif 320 pour lui appliquer une tension et lui fournir un courant. Le convertisseur 320 inclut un onduleur 330. L'onduleur 330 a ici une structure de découpage en pont connue en soi. L'onduleur 330 comprend des composants de découpage de type transistors. Les transistors sont pilotés par un circuit de pilotage 350 afin de transformer la tension continue fournie par le réseau 4 en une tension alternative appliquée sur la sortie de l'onduleur 330. Le circuit de pilotage 350 est lui-même contrôlé par un circuit de contrôle 5.

Un circuit résonnant 340 est connecté à la sortie de l'onduleur 330, c'est-à-dire en sortie du bras de pont de cet onduleur 330. Le circuit résonnant série 340 comporte ici un condensateur 341, une inductance 342 et une inductance 343. Le circuit résonnant série 340 est connecté en série avec le primaire 311 du transformateur 310.

Un exemple de dimensionnement du circuit résonnant 340 peut être le suivant :
- on définit au préalable une valeur de puissance à transmettre au secondaire du transformateur 310, par exemple une valeur Pout=48W ;
- on détermine une tension d'entrée minimum Emin pour le convertisseur alternatif/continus 320, par exemple Emin= 11V pour un réseau 4 de type 12V et dont la tension est régulée entre 11 et 13 V ;
- on suppose un rendement du convertisseur continu/alternatif 320 de 85 % ;
- on fixe une fréquence minimum de fonctionnement fr de 220kHz liée à la technologie des circuits de pilotage et du type de semiconducteurs utilisés;
- on choisit un fonctionnement du convertisseur 320 à une fréquence supérieure à une fréquence de résonance f0, avec f0 choisie pour valoir par exemple 200kHz ;
- on détermine un facteur de surtension applicable au condensateur 341. Ce critère varie en fonction de la technologie de ce condensateur 341 et de la fréquence de fonctionnement. Avec un condensateur céramique de type COG, ce facteur de surtension a une valeur approximativement de 1, par exemple 1,075 ;
- on fixe une tension de sortie maximale Voutmax=4V aux bornes d'un étage.

Une inductance totale de 2879 nH calculée pour l'association des inductances 342 et 343, et une valeur de capacité de 220nF pour le condensateur 341 permettent alors par exemple d'obtenir la fréquence de résonance f0 souhaitée.

Un rapport de transformation m simple tel que m*Emin>Voutmax peut être choisi entre le primaire 311 et chaque sortie du secondaire 312. Cependant, plus on s'éloigne de la relation m*Emin=Voutmax, plus le rendement de conversion baisse. Un compromis peut amener à choisir m=0,5.

La combinaison de l'onduleur 330 avec le circuit résonnant série 340 et le circuit de commande 5 permet de faire fonctionner sélectivement le convertisseur continu/alternatif 320 :
- dans un mode de fonctionnement en source de puissance ou source de courant alternatif à niveau étagé en fonction du nombre de sorties alimentées, que l'on désignera par mode de fonctionnement à niveau étagé ;
- dans un autre mode de fonctionnement, de façon à ce que celui-ci fonctionne à puissance constante indépendamment du nombre de sorties alimentées, que l'on désignera par mode de fonctionnement à niveau constant.

Dans le mode de fonctionnement en source de puissance à niveau étagé, on maîtrise aisément la puissance et le courant appliqués au primaire du transformateur 310 et donc la puissance transmise aux étages.

Le circuit de commande 5 bascule entre le mode de fonctionnement à niveau étagé et le mode de fonctionnement à niveau constant selon les critères suivants :
- si le nombre act de convertisseurs alternatif/continu 300 devant alimenter simultanément leur sortie respective est inférieur ou égal à un seuil nt, le circuit de commande 5 fait fonctionner le convertisseur 320 de telle sorte à réguler sa puissance de sortie Pcc (ou de sorte à réguler son courant de sortie Icc). La consigne de puissance Pcc du convertisseur 320 vaut alors Pcc= act * Pinc, avec Pinc une constante. Pinc est par exemple la puissance unitaire que doit fournir le convertisseur 320 pour qu'un unique convertisseur 300 reçoive une puissance de charge nominale sur un étage 200 (la puissance fournie par le convertisseur 320 au primaire du transformateur 310 étant égale à la somme des puissances apportées aux étages sélectionnés, en supposant un rapport de transformation de 1 et un rendement de 100% pour les convertisseurs 300). Alternativement, une consigne de courant Icc du convertisseur 320 vaut alors Icc= act * Iun (en supposant toujours un rapport de transformation de 1 et un rendement de 100% pour les convertisseurs 300) avec Iun le courant que doit débiter le convertisseur 320 pour qu'un unique convertisseur 300 applique le courant de charge nominal sur un étage 200 ;
- si le nombre act de convertisseurs alternatif/continu 300 devant alimenter simultanément leur sortie respective est supérieur au seuil nt, le circuit de commande 5 fait fonctionner le convertisseur 320 avec une régulation du type puissance à niveau constant, indépendamment du nombre act de convertisseurs. Le courant de charge des étages 200 rechargés en simultané est alors inférieur à leur courant nominal de charge.

Le seuil nt peut par exemple être déterminé de la façon suivante. Soit Pout la puissance maximale que le convertisseur 320 peut fournir au primaire du transformateur 310, et Pinc une puissance à appliquer au primaire qu'un unique convertisseur 300 applique sa puissance maximale sur sa sortie (on suppose par simplification un rendement de 100% pour les convertisseurs 300). Les modes de fonctionnement sont alors déterminés selon les règles suivantes :
- si act * Pinc ≤ Pout, alors le circuit de commande 5 fait fonctionner le convertisseur 320 en mode à niveau étagé fournissant au primaire la puissance Pcc =act * Pinc ;
- si act * Pinc > Pout, alors le circuit de commande 5 fait fonctionner le convertisseur 320 en mode à niveau constant. Le seuil nt est donc la plus grande valeur de act pour laquelle la relation act * Pinc ≤ Pout est vérifiée.

Les modes de fonctionnement peuvent également être déterminés selon les règles suivantes au primaire :
- si act * Psec ≤ Ppr, (avec Ppr la puissance maximale que le convertisseur 320 peut fournir au secondaire du transformateur 310, et Psec la puissance maximale que chaque convertisseur 300 peut appliquer sur sa sortie) alors le circuit de commande 5 fait fonctionner le convertisseur 320 en mode à niveau étagé fournissant la puissance totale Pch Pch=act*Pun (avec Pun une constante, correspondant à une puissance que l'on souhaite appliquer sur un étage sélectionné) appliquée aux différents étages sélectionnés. Si Pun = Psec, on fournit au secondaire du transformateur une puissance égale à act * Psec ;
- si act * Psec > Ppr, alors le circuit de commande 5 fait fonctionner le convertisseur 320 en mode à niveau constant. Le seuil nt est donc la plus grande valeur de act pour laquelle la relation act * Psec ≤ Ppr est vérifiée.

Ainsi, selon l'invention, le refroidissement du convertisseur 320 peut rester dimensionné pour une puissance relativement réduite, tout en bénéficiant d'un temps d'équilibrage de charge optimisé pour la batterie 2. De même, on peut adapter le dimensionnement du transformateur 310 à cette puissance relativement réduite. En utilisant un convertisseur 320 d'une puissance relativement réduite, on peut éviter les pertes par effet Joule qu'induirait un convertisseur de plus grande puissance. Le fonctionnement du convertisseur 320 présente un rendement énergétique optimal, puisqu'il fonctionne à sa puissance nominale pendant une durée prépondérante correspondant au mode de fonctionnement à niveau constant. A chaque instant, l'énergie transmise est optimisée, ce qui a pour conséquence de réduire considérablement les temps d'équilibrage.

Avantageusement, le dimensionnement du résonateur série 340 est suffisamment réduit pour obtenir un coût contenu. En particulier, l'inductance 342 du circuit série 340 est dimensionnée pour limiter la puissance Pout appliquée sur le primaire du transformateur 310 de sorte que Pout < n * Pinc, avec n le nombre d'étages de la batterie. Pour une fréquence de fonctionnement et une tension données, on peut aisément déterminer les caractéristiques de l'inductance 342 (telles que sa valeur d'inductance) permettant de limiter la puissance Pout pouvant être appliquée au primaire du transformateur.

Le dimensionnement des circuits secondaires est réalisé de sorte que chaque circuit secondaire (et en particulier le circuit redresseur) puisse supporter la puissance appliquée par son enroulement secondaire pour une puissance Psec sur la sortie du convertisseur 300. Ainsi, le calibre de diodes de redressement dans le circuit redresseur double alternance 360 est au moins égal au courant traversant le circuit secondaire lorsque la puissance Psec est appliquée sur l'étage correspondant.

La figure 5 est un schéma électrique d'un exemple de convertisseur alternatif/continu 300 du dispositif d'équilibrage de charge 3. Le convertisseur 300 comporte une entrée connectée à une sortie ou un enroulement respectif du secondaire 312 du transformateur 310. L'entrée du convertisseur 300 est ici connectée en pont entre quatre éléments de redressement 374 d'un circuit redresseur 360. Les éléments de redressement 374 sont ici des diodes. Un interrupteur 373 est connecté entre le circuit redresseur 360 et la sortie du convertisseur 300. L'interrupteur 373 comprend ici un transistor de type Mosfet. Ce transistor 373 est commandé par le circuit de commande 5, par l'intermédiaire d'un circuit de pilotage non détaillé. L'interrupteur 373 permet d'interrompre sélectivement l'alimentation de la sortie du convertisseur 300. L'interrupteur 373 permet ainsi de contrôler sélectivement la charge de l'étage 200 connecté sur cette sortie. L'ensemble des circuits redresseurs 360 décrits dans les exemples sont de type double alternance. L'avantage de tels redresseurs double alternance en combinaison avec le dimensionnement des inductances sera détaillé par la suite.

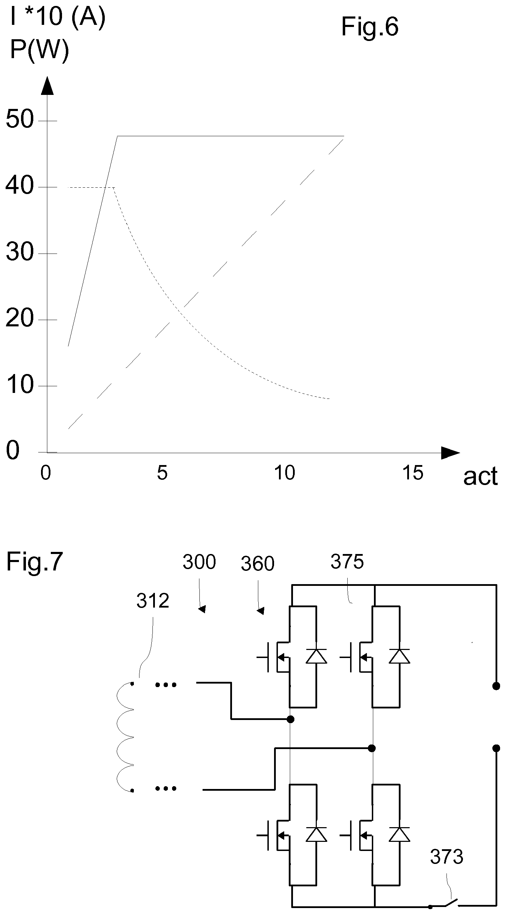

Le diagramme de la figure 6 permet de faire ressortir les performances d'équilibrage de charge d'un dispositif d'équilibrage 3 selon l'invention par rapport à d'autres dispositifs d'équilibrage de charge conçus selon l'état de la technique. La courbe en trait discontinu correspond à un dispositif d'équilibrage de charge correspondant à l'enseignement du document WO2011095608. La courbe en pointillés correspond à l'enseignement du document US20010115436. La courbe en trait plein correspond à un dispositif d'équilibrage de charge 3 selon une mise en oeuvre de l'invention.

Dans ce diagramme, l'abscisse correspond au nombre act de convertisseurs alternatif/continu en cours d'équilibrage de charge. L'ordonnée correspond à la puissance totale de charge ou à un multiple du courant total de charge fourni par chaque dispositif d'équilibrage de charge.

Pour les différents dispositifs d'équilibrage de charge, on a pris comme hypothèse que chacun d'entre eux est capable de fournir une puissance de 48W en sortie.

Pour le dispositif d'équilibrage de charge représenté par le trait discontinu, chaque convertisseur de sortie est dimensionné pour fournir un courant de charge maximal de 1A sous 4V. La puissance de charge est alors proportionnelle au nombre d'étages Act en cours de charge.

Pour le dispositif d'équilibrage de charge représenté par le trait pointillé, on constate que la puissance moyenne de charge (car la charge des différents étages est séquentielle) est élevée pour un nombre réduit d'étages dont on souhaite équilibrer la charge. La puissance moyenne de charge est alors essentiellement limitée par le dimensionnement des convertisseurs de sortie. Dès que le nombre d'étages dont on souhaite équilibrer la charge augmente, la puissance moyenne de charge chute rapidement.

Pour le dispositif d'équilibrage 3 selon l'invention, on a pris comme hypothèse des convertisseurs alternatif/continu dimensionnés pour fournir chacun un courant de charge de leur étage jusqu'à 4A. La puissance de charge est proportionnelle au nombre d'étages en cours de charge simultanée pour la partie gauche du diagramme, qui correspond au mode de fonctionnement à niveau étagé du convertisseur continu/alternatif. Le ou les étages en cours de charge simultanée bénéficient alors d'un courant de charge relativement élevé afin de procéder à une phase d'équilibrage rapide (ce mode de fonctionnement correspond davantage à un début d'équilibrage de charge). La puissance de charge est constante et optimale pour la partie droite du diagramme, qui correspond au mode de fonctionnement à niveau constant du convertisseur continu/alternatif (ce mode de fonctionnement correspond davantage à une fin d'équilibrage de charge). Cette phase d'équilibrage de charge est également rapide puisque toute la puissance rendue disponible par le convertisseur continu/alternatif est exploitée.

Chaque convertisseur alternatif/continu 300 comporte au moins une inductance connectée entre son entrée et son circuit redresseur 360. Dans l'exemple illustré à la figure 5, le convertisseur 300 comporte deux éléments inductifs 371 et 372 connectés entre l'entrée du convertisseur 300 et le circuit redresseur 360. Cette inductance est utilisée pour présenter une valeur prépondérante par rapport aux inductances parasites de connectique. Des règles de dimensionnement d'inductances seront détaillées par la suite.

Lorsque plusieurs convertisseurs 300 alimentent simultanément leurs étages respectifs 200, le courant circulant dans le primaire du transformateur 311 se répartit dans les enroulements du secondaire au prorata des impédances de ligne de ces convertisseurs. Au moyen desdites inductances, on peut homogénéiser les courants débités par différents convertisseurs alternatif/continu 300 en simultané.

La figure 7 est un schéma électrique d'une variante de convertisseur alternatif/continu 300 du dispositif d'équilibrage de charge 3. Le convertisseur 300 comporte une entrée connectée à un enroulement respectif du secondaire 312 du transformateur 310. L'entrée du convertisseur 300 est ici connectée en pont entre quatre éléments de redressement 375 d'un circuit redresseur 360. Les éléments de redressement 375 sont ici des interrupteurs basés sur des transistors de type Mosfet. Le circuit redresseur 360 est à redressement synchrone, les commutations desdits transistors de redressement étant commandées par le circuit de commande 5 et par un circuit de pilotage non illustré.

Un interrupteur 373 est connecté entre le circuit redresseur 360 et la sortie du convertisseur 300. L'interrupteur 373 est commandé par le circuit de commande 5 afin d'interrompre sélectivement l'alimentation de la sortie du convertisseur 300. L'interrupteur 373 permet ainsi de contrôler sélectivement la charge d'un étage 200 connecté sur cette sortie. Le convertisseur 300 comporte également une inductance (non illustrée) connectée entre son entrée et son circuit redresseur 360.

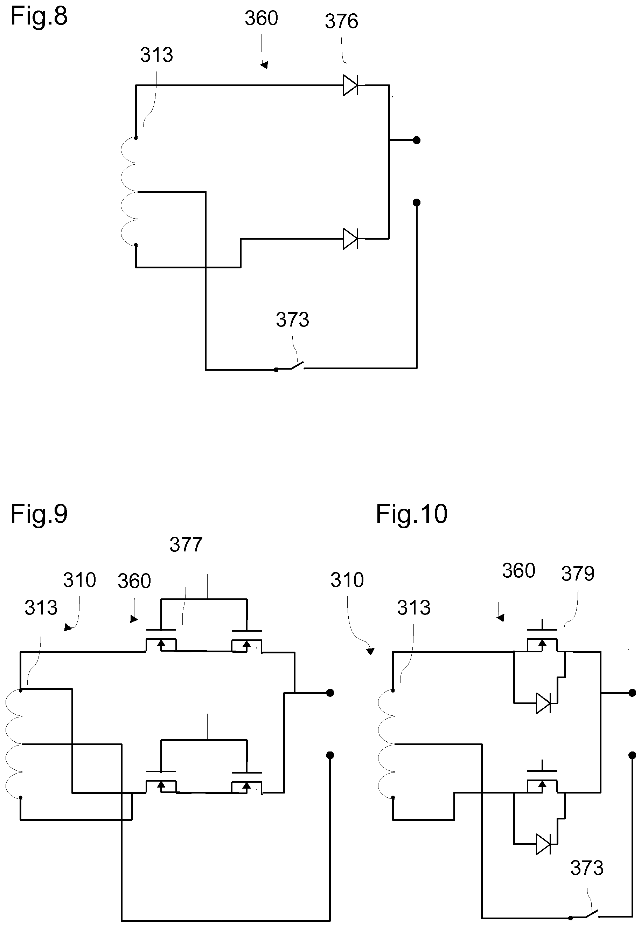

La figure 8 est un schéma électrique d'une autre variante d'un circuit redresseur 360. Le circuit redresseur 360 est connecté à un enroulement secondaire 313 à point milieu du transformateur 310. Les éléments de redressement 376 du circuit redresseur 360 sont ici des diodes. Chaque diode est connectée entre d'une part une borne respective de l'enroulement secondaire 313, et d'autre part une borne de sortie du convertisseur alternatif/continu 300. L'autre borne de sortie du convertisseur alternatif/continu 300 est connectée au point milieu de l'enroulement 313 par l'intermédiaire de l'interrupteur 373.

La figure 9 est un schéma électrique d'une autre variante d'un circuit redresseur 360 d'un convertisseur alternatif/continu 300. Le circuit redresseur 360 est connecté à un enroulement secondaire 313 à point milieu du transformateur 310. Le circuit redresseur 360 est ici de type synchrone. Les éléments de redressement 377 du circuit redresseur 360 incluent ici des interrupteurs bidirectionnels par exemple basés sur des transistors de type Mosfet montés en série. Chaque interrupteur 377 est connecté entre d'une part une borne respective de l'enroulement secondaire 313, et d'autre part une borne de sortie du convertisseur alternatif/continu 300. L'autre borne de sortie du convertisseur alternatif/continu 300 est connectée au point milieu de l'enroulement 313. Les ouvertures des interrupteurs 377 peuvent être commandées pour interrompre sélectivement l'alimentation de la sortie du convertisseur alternatif/continu 300, et ainsi se dispenser d'un interrupteur dédié pour cette fonction.

La figure 10 est un schéma électrique d'une variante du convertisseur alternatif/continu 300 de la figure 8. Ce convertisseur diffère de celui de la figure 8 par l'utilisation d'interrupteurs 379 de type Mosfet en remplacement des diodes 376.

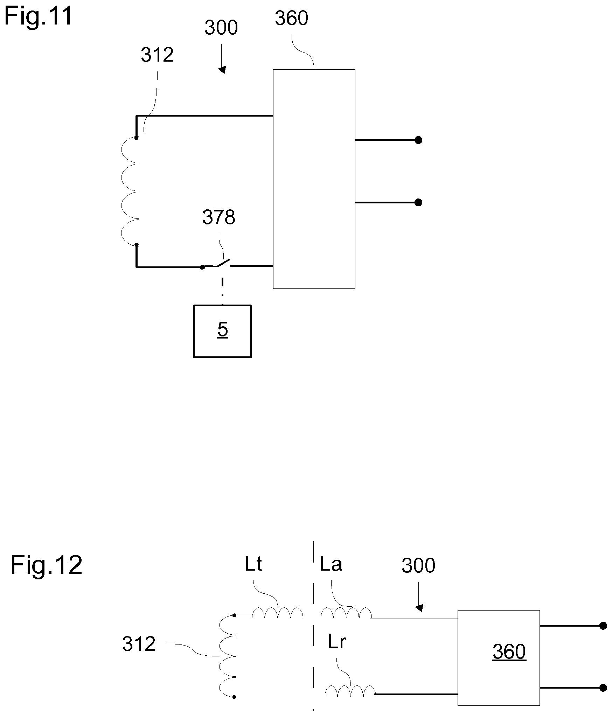

La figure 11 est un schéma électrique d'une autre variante de convertisseur alternatif/continu 300. Dans ce cas de figure, l'alimentation de la sortie du convertisseur 300 est sélectivement interrompue par l'intermédiaire d'un relais 378 commandé par le circuit de commande 5. Le relais 378 est ainsi configuré pour ouvrir sélectivement une connexion avec l'entrée du convertisseur 300, en amont du circuit de redressement 360.

Par ailleurs, pour éviter des disparités de courants de charge entre les différents étages 200 chargés en simultané, il est souhaitable que ces étages 200 présentent une même tension. Par conséquent, le circuit de commande 5 peut commander la charge des étages de la façon suivante.

Le circuit de commande 5 est configuré pour déterminer à intervalles réguliers le ou lesquels des étages présentent la tension la plus basse. Le circuit de commande 5 commande alors la charge de seulement le ou les étages qui ont été déterminés comme ayant la tension la plus basse. Cette stratégie permet dans le cadre de l'invention d'appliquer un courant de charge élevé sur des étages nettement plus déchargés que les autres. L'équilibrage débute ainsi par la charge optimale des accumulateurs les plus limitatifs pour la capacité globale de la batterie 2. Ainsi, même si le temps d'équilibrage de charge est limité, ce mode de fonctionnement permet de bénéficier d'une efficacité d'équilibrage optimale. En outre, on ne charge alors en simultané que des étages ayant un même niveau de tension. On peut ainsi bénéficier d'une répartition uniforme du courant entre les étages en cours de charge.

Le circuit de commande 5 détermine à intervalles réguliers l'état de charge de chacun des étages 200. Cet état de charge peut être déterminé par mesure de tension ou extrapolé à partir de la connaissance de la quantité d'énergie stockée dans chaque étage 200 lors de l'équilibrage de charge. Le circuit de commande 5 peut par exemple déterminer l'énergie de charge en connaissant le nombre d'étages (et donc le mode de fonctionnement) chargés en simultané pendant des durées données. Une telle détermination de l'état de charge est facilité par la stratégie de commande décrite précédemment, puisque les étages en cours de charge présentent une même tension et reçoivent une même énergie de charge en simultané.

Comme détaillé auparavant, il s'avère avantageux de disposer de mêmes impédances de ligne pour les différents convertisseurs alternatif/continu 300. Une telle homogénéisation de l'impédance de ligne est relativement délicate à obtenir pour la batterie 2. En effet, il s'avère en pratique impossible d'obtenir une distance de connexion identique entre les différents étages et le transformateur 310. Par conséquent, ces différences de distance induisent des dispersions entre les impédances de ligne. De façon similaire, les différentes sorties du secondaire 312 peuvent présenter des inductances de fuite présentant des dispersions.

La figure 12 est un schéma électrique détaillant des valeurs d'inductances du côté d'un convertisseur alternatif/continu 300. Lt représente l'inductance de fuite de la sortie du secondaire 312 pour ce transformateur. La représente l'inductance induite par une première connexion du circuit redresseur 360 à une première borne de sortie du secondaire 312 pour ce transformateur, et Lr représente l'inductance induite par une deuxième connexion du circuit redresseur 360 à la deuxième borne de sortie du secondaire 312 pour ce transformateur.

En désignant par Lti l'inductance de fuite dans l'enroulement secondaire pour un convertisseur alternatif/continu d'indice i, Lai et Lri les inductances de connexion induites par les éléments conducteurs entre le circuit redresseur 360i et cette sortie, on dimensionnera ces éléments conducteurs pour chaque convertisseur alternatif/continu pour vérifier la relation suivante :
Lti+ Lai+Lri=K, avec K une constante.

Cette relation peut être respectée en mesurant au préalable les différentes valeurs Lti et en adaptant les valeurs Lai et Lri par des connexions ou des composants inductifs appropriés.

On peut par exemple envisager de grouper sur un même circuit imprimé les connexions entre les différents convertisseurs alternatif/continu et les sorties du secondaire 312. Lors de la conception, on adapte alors la largeur des pistes de liaison du circuit imprimé, en fonction de leur longueur, afin d'obtenir des valeurs Lai et Lri vérifiant la relation mentionnée. Les valeurs Lai et Lri peuvent inclure les valeurs d'inductance des éléments inductifs 371 et 372 détaillés précédemment.

Il est souhaitable que les circuits secondaires connectés à chacun des enroulements secondaires soient les plus simples, les plus compacts et les moins coûteux. Un circuit secondaire désignera l'ensemble des composants et conducteurs connectés entre un étage et son enroulement secondaire respectif.

Afin de ne pas avoir à sur-dimensionner les circuits secondaires, il est souhaitable de minimiser les dispersions entre ces différents circuits secondaires. En effet, si le comportement électrique (le courant délivré à un étage, les surtensions dans des éléments parasites...) est variable d'un circuit à l'autre, on est obligé de prévoir une marge sur le courant ou la puissance délivrés sur l'enroulement secondaire, pour ne pas dépasser les courants ou tensions maximums admissibles par les composants du circuit secondaire. Ces dispersions sont typiquement dues aux dispersions technologiques entre les circuits secondaires et aux inductances parasites de câblage (relativement variables et parfois mal maîtrisées).

Afin de limiter le surdimensionnement des circuits secondaires, y compris l'enroulement secondaire du transformateur, il est souhaitable de disposer d'un courant dans l'enroulement secondaire qui présente des variations les plus faibles possibles, afin de garantir une quasi-continuité de conduction dans les circuits secondaires. Ainsi, en utilisant un redresseur double alternance, on obtient un courant moyen recherché avec des valeurs crêtes de courant plus faibles. Ce choix va à l'encontre du dimensionnement classique souhaité par l'homme du métier : pour fournir seulement une amplitude de quelques volts à un étage et avec un grand nombre de circuits secondaires, on favorise généralement une structure comme le Flyback à enroulement unique par sortie et diode unique, afin de limiter globalement les pertes à la chute de tension dans une diode et afin de limiter le nombre de composants utilisés. Un tel convertisseur, de type Flyback à enroulement et diode uniques pour chaque sortie, s'oppose à l'établissement du courant dans le circuit secondaire et perturbent l'amplitude de ce courant. A contrario, l'utilisation d'un redresseur double alternance conformément à l'invention permet d'optimiser le transfert d'énergie entre le condensateur et l'inductance du côté du circuit résonant série 340.

Dans le cas de quatre éléments de redressement avec un secondaire du transformateur connecté en pont entre ces quatre éléments de redressement, l'inductance de fuite du secondaire est complètement intégrée à l'inductance de résonance du circuit résonant série 340, contrairement au cas du redressement à point milieu. Dans le cas du redressement à point milieu, la présence d'inductances parasites au secondaire implique nécessairement l'utilisation de circuits d'aides à la commutation, dans le but de limiter les surtensions, d'améliorer la comptabilité électromagnétique du circuit et enfin de diminuer les pertes induites par les oscillations parasites dans le transformateur. De tels circuits d'aide à la commutation étant le siège de pertes par commutation supplémentaires, la montée en fréquence est alors plus difficile qu'avec les variantes avec quatre éléments de redressement.

Un équilibrage de charge par charge de différents étages peut être mis en oeuvre soit lors d'une phase globale de charge, soit lors d'une phase globale de décharge.

Bien que non illustré, le système d'alimentation électrique 1 comprend avantageusement un dispositif de mesure et de surveillance de la tension aux bornes des étages d'accumulateurs.

## Revendications

1. Dispositif d'équilibrage (3) de charge d'un dispositif de stockage d'énergie électrique de puissance (2) incluant plusieurs éléments de stockage d'énergie électrique (201, 202, 203) connectés en série, comprenant :
- un convertisseur continu/alternatif (320) incluant :
- un onduleur (330) comportant une entrée destinée à être connectée une source de tension continue (4) ;
- plusieurs convertisseurs alternatif/continu (301, 302, 303) comportant chacun une entrée, et une sortie connectée à un desdits éléments de stockage d'énergie respectif (201, 202, 203), chaque convertisseur alternatif/continu alimentant sélectivement sa sortie, étant connecté à une sortie respective du secondaire d'un transformateur par l'intermédiaire de première et deuxième liaisons conductrices présentant des inductances respectives Lai et Lri pour un convertisseur alternatif/continu d'indice i, l'inductance de fuite du secondaire (312) du transformateur pour sa sortie connectée au convertisseur d'indice i présentant une valeur Lti ;
- un transformateur (310) ;-un circuit de commande (5) configuré pour commander chaque convertisseur alternatif/continu (301, 302, 303) pour l'alimentation sélective de sa sortie, et configuré pour commander le convertisseur continu/alternatif (320) de sorte qu'il fournisse une puissance Pcc=act*Pinc au primaire du transformateur lorsque le nombre de sorties act alimentées par leur convertisseur alternatif/continu est inférieur ou égal à un seuil, avec Pinc une constante, et configuré pour commander le convertisseur continu/alternatif (320) de sorte qu'il fournisse une même puissance Pout constante lorsque le nombre de sorties act alimentées par leur convertisseur alternatif/continu est supérieur audit seuil ;
**Caractérisé en ce que** :
- le dispositif d'équilibrage de charge comprend en outre un circuit résonant série (340) connecté à la sortie de l'onduleur ;
- le primaire (311) du transformateur est connecté au circuit résonnant série (340) et le secondaire (312) du transformateur présente des enroulements secondaires et des sorties connectées aux bornes d'enroulements secondaires respectifs, chacune de ces sorties étant connectée à une entrée d'un convertisseur alternatif/continu respectif;
- chacun desdits convertisseurs alternatif/continu inclut un circuit redresseur double alternance ;
- les première et deuxième liaisons conductrices desdits convertisseurs sont dimensionnées de sorte que les valeurs de Lti, Lai et Lri vérifient la relation suivante pour chaque valeur de l'indice i : Lti+ Lai+Lri=K, avec K une constante.

2. Dispositif (3) d'équilibrage de charge selon la revendication 1, dans lequel ledit circuit résonnant série (340) comprend un condensateur (341) et une inductance (342) connectés en série.

3. Dispositif (3) d'équilibrage de charge selon la revendication 1 ou 2, dans lequel chacun desdits convertisseurs alternatif/continu (300) comprend une inductance connectée dans une desdites liaisons conductrices entre l'entrée de ce convertisseur alternatif/continu et son circuit redresseur.

4. Dispositif (3) d'équilibrage de charge selon l'une quelconque des revendications précédentes, dans lequel le circuit de commande (5) est configuré pour déterminer quel élément de stockage d'énergie (200) présente la tension la plus basse, et configuré pour commander l'alimentation d'une sortie par son convertisseur alternatif/continu (360) seulement lorsqu'il a été déterminé que l'élément de stockage d'énergie (200) connecté à cette sortie présente la tension la plus basse.

5. Dispositif (3) d'équilibrage de charge selon les revendications 3 et 4, dans lequel le circuit de commande (5) détermine l'état de charge de chacun desdits éléments de stockage (200) à partir du temps d'alimentation de la sortie connectée à chaque élément de stockage d'une part lorsque le convertisseur continu/alternatif (320) est commandé à puissance constante et d'autre part lorsque ce convertisseur continu/alternatif (320) est commandé en source de courant.

6. Dispositif (3) d'équilibrage de charge selon l'une quelconque des revendications précédentes, dans lequel chacun desdits convertisseurs alternatif/continu comprend quatre éléments de redressement et dans lequel une sortie du secondaire (312) dudit transformateur (310) est connectée en pont entre les quatre éléments de redressement.

7. Dispositif (3) d'équilibrage de charge selon l'une quelconque des revendications 1 à 5, dans lequel le secondaire (312) du transformateur comporte un enroulement secondaire à point milieu pour chacun desdits convertisseurs alternatif/continu (300), et dans lequel chacun desdits convertisseurs alternatif/continu comprend des premier et deuxième éléments de redressement (376) connectés d'une part à une borne de leur élément de stockage et d'autre part à une borne respective de leur enroulement secondaire, le point milieu de l'enroulement secondaire étant connecté à l'autre borne de leur élément de stockage.

8. Dispositif (3) d'équilibrage de charge selon l'une quelconque des revendications précédentes, dans lequel chacun desdits convertisseurs alternatif/continu (300) comprend un interrupteur (373) commandé par ledit circuit de commande (5) de façon à connecter sélectivement une sortie de ce convertisseur alternatif/continu (300) à son élément de stockage respectif.

9. Dispositif (3) d'équilibrage de charge selon l'une quelconque des revendications 1 à 7, dans lequel chacun des convertisseurs alternatif/continu (300) comprend un élément de redressement et un relais commandé par ledit circuit de commande, ledit relais connectant sélectivement le secondaire (312) du transformateur audit élément de redressement.

10. Dispositif d'équilibrage de charge selon l'une quelconque des revendications précédentes, dans lequel ledit onduleur (330) est dimensionné pour une tension d'entrée inférieure à la tension aux bornes du dispositif de stockage électrique de puissance.

## Patentansprüche

1. Ladungsausgleichsvorrichtung (3) für eine Leistungsstromspeichervorrichtung (2), die mehrere in Reihe geschaltete Stromspeicherelemente (201, 202, 203) beinhaltet, umfassend:
- einen Gleichstrom/Wechselstrom-Wandler (320), beinhaltend:
- einen Wechselrichter (330) mit einem Eingang, der dazu bestimmt ist, an eine Gleichspannungsquelle (4) geschaltet zu werden;
- mehrere Wechselstrom/Gleichstrom-Wandler (301, 302, 303) mit jeweils einem Eingang und mit einem Ausgang, der an eines der jeweiligen Energiespeicherelemente (201, 202, 203) geschaltet ist, wobei jeder Wechselstrom/Gleichstrom-Wandler seinen Ausgang selektiv speist, wobei er an einen jeweiligen Ausgang der Sekundärseite eines Transformators über erste und zweite leitende Verbindungen geschaltet ist, die jeweilige Induktivitäten Lai und Lri bei einem Wechselstrom/Gleichstrom-Wandler mit dem Index i aufweisen, wobei die Streuinduktivität der Sekundärseite (312) des Transformators bei seinem an den Wandler mit dem Index i geschalteten Ausgang einen Wert Lti aufweist;
- einen Transformator (310);
- einen Steuerkreis (5), der dazu ausgestaltet ist, jeden Wechselstrom/Gleichstrom-Wandler (301, 302, 303) zur selektiven Speisung seines Ausgangs zu steuern, und der dazu ausgestaltet ist, den Gleichstrom/Wechselstrom-Wandler (320) so zu steuern, dass er eine Leistung Pcc=act*Pinc an der Primärseite des Transformators bereitstellt, wenn die Anzahl von Ausgängen act, die von ihrem Wechselstrom/Gleichstrom-Wandler gespeist werden, kleiner oder gleich einem Schwellenwert ist, wobei Pinc eine Konstante ist, und der dazu ausgestaltet ist, den Gleichstrom/Wechselstrom-Wandler (320) so zu steuern, dass er eine gleiche konstante Leistung Pout bereitstellt, wenn die Anzahl der Ausgänge act, die von ihrem Wechselstrom/Gleichstrom-Wandler gespeist werden, über dem Schwellenwert liegt;
**dadurch gekennzeichnet, dass**:
- die Ladungsausgleichsvorrichtung ferner einen Reihenschwingkreis (340) umfasst, der an den Ausgang des Wechselrichters geschaltet ist;
- die Primärseite (311) des Transformators an den Reihenschwingkreis (340) geschaltet ist und die Sekundärseite (312) des Transformators Sekundärwicklungen aufweist und Ausgänge, die an die Klemmen von jeweiligen Sekundärwicklungen geschaltet sind, wobei jeder dieser Ausgänge an einen Eingang eines jeweiligen Wechselstrom/Gleichstrom-Wandlers geschaltet ist;
- jeder der Wechselstrom/Gleichstrom-Wandler einen Zweiweggleichrichterkreis beinhaltet;
- die erste und die zweite leitende Verbindung der Wandler so ausgelegt sind, dass die Werte von Lti, Lai und Lri für jeden Wert des Indexes i die folgende Gleichung erfüllen: Lti+Lai+Lri=K, wobei Keine Konstante ist.

2. Ladungsausgleichsvorrichtung (3) nach Anspruch 1, bei welcher der Reihenschwingkreis (340) einen Kondensator (341) und eine Induktivität (342) umfasst, die in Reihe geschaltet sind.

3. Ladungsausgleichsvorrichtung (3) nach Anspruch 1 oder 2, bei der jeder der Wechselstrom/Gleichstrom-Wandler (300) eine Induktivität umfasst, die in einer der leitenden Verbindungen zwischen den Eingang dieses Wechselstrom/Gleichstrom-Wandlers und seinen Gleichrichterkreis geschaltet ist.

4. Ladungsausgleichsvorrichtung (3) nach einem der vorhergehenden Ansprüche, bei welcher der Steuerkreis (5) dazu ausgestaltet ist zu bestimmen, welches Energiespeicherelement (200) die niedrigste Spannung aufweist, und dazu ausgestaltet ist, die Speisung eines Ausgangs durch seinen Wechselstrom/Gleichstrom-Wandler (360) nur zu steuern, wenn bestimmt worden ist, dass das an diesen Ausgang geschaltete Energiespeicherelement (200) die niedrigste Spannung aufweist.

5. Ladungsausgleichsvorrichtung (3) nach den Ansprüchen 3 und 4, bei welcher der Steuerkreis (5) den Ladezustand jedes der Speicherelemente (200) anhand der Speisezeit des an jedes Speicherelement geschalteten Ausgangs zum einen bestimmt, wenn der Gleichstrom/Wechselstrom-Wandler (320) auf konstante Leistung gesteuert wird, und zum anderen, wenn dieser Gleichstrom/Wechselstrom-Wandler (320) als Stromquelle gesteuert wird.

6. Ladungsausgleichsvorrichtung (3) nach einem der vorhergehenden Ansprüche, bei der jeder der Wechselstrom/Gleichstrom-Wandler vier Gleichrichterelemente umfasst und bei der ein Ausgang der Sekundärseite (312) des Transformators (310) gebrückt zwischen die vier Gleichrichterelemente geschaltet ist.

7. Ladungsausgleichsvorrichtung (3) nach einem der Ansprüche 1 bis 5, bei der die Sekundärseite (312) des Transformators eine Sekundärwicklung mit Mittenanzapfung für jeden der Wechselstrom/Gleichstrom-Wandler (300) aufweist und bei der jeder der Wechselstrom/Gleichstrom-Wandler erste und zweite Gleichrichterelemente (376) umfasst, die zum einen an eine Klemme ihres Speicherelements und zum anderen an eine jeweilige Klemme ihrer Sekundärwicklung geschaltet sind, wobei die Mittenanzapfung der Sekundärwicklung an die andere Klemme ihres Speicherelements geschaltet ist.

8. Ladungsausgleichsvorrichtung (3) nach einem der vorhergehenden Ansprüche, bei der jeder der Wechselstrom/Gleichstrom-Wandler (300) einen Schalter (373) umfasst, der vom Steuerkreis (5) so gesteuert wird, dass er einen Ausgang dieses Wechselstrom/Gleichstrom-Wandlers (300) selektiv an sein jeweiliges Speicherelement schaltet.

9. Ladungsausgleichsvorrichtung (3) nach einem der Ansprüche 1 bis 7, bei der jeder der Wechselstrom/Gleichstrom-Wandler (300) ein Gleichrichterelement und ein vom Steuerkreis gesteuertes Relais umfasst, wobei das Relais die Sekundärseite (312) des Transformators selektiv an das Gleichrichterelement schaltet.

10. Ladungsausgleichsvorrichtung nach einem der vorhergehenden Ansprüche, bei welcher der Wechselrichter (330) auf eine Eingangsspannung ausgelegt ist, die niedriger als die Spannung an den Klemmen der Leistungsstromspeichervorrichtung ist.

## Claims

1. A charge balancing device (3) of an electrical energy power storage device (2) including a plurality of series-connected electrical energy storage elements (201, 202, 203), it including:
- a DC/AC converter (320), including:
- an inverter (330) comprising an input intended to be connected to a direct-voltage source (4);
- a plurality of AC/DC converters (301, 302, 303) each comprising an input and an output connected to one of said respective energy storage elements (201, 202, 203), each AC/DC converter selectively supplying its output with power, and being connected to a respective output of the secondary of a transformer via first and second conducting connections having respective inductances Lai and Lri for an AC/DC converter with an index i, the leakage inductance of the secondary (312) of the transformer for its output connected to the converter with an index i having a value Lti;
- a transformer (310);
- a control circuit (5) configured to control each AC/DC converter (301, 302, 303) for the selective power supply of its output, and configured to control the DC/AC converter (320) in such a way that it supplies a power Pcc=act*Pinc to the primary of the transformer when the number of outputs act supplied with power by their AC/DC converter is less than or equal to a threshold, where Pinc is a constant, and configured to control the DC/AC converter (320) in such a way that it supplies the same constant power Pout when the number of outputs act supplied with power by their AC/DC converter is greater than said threshold,
**characterized in that**:
- the charge balancing device further includes a series resonant circuit (340) connected to the output of the inverter;
- the primary (311) of the transformer is connected to the series resonant circuit (340) and the secondary (312) of the transformer has secondary windings and outputs connected to the terminals of respective secondary windings, each of these outputs being connected to an input of a respective AC/DC converter;
- each of said AC/DC converters includes a full-wave rectifier circuit,
- the first and second conducting connections of said converters are dimensioned in such a way that the values of Lti, Lai and Lri verify the following relationship for each value of the index i: Lti+Lai+Lri=K, where K is a constant.

2. Charge balancing device (3) according to Claim 1, in which said series resonant circuit (340) includes a capacitor (341) and an inductor (342) connected in series.

3. Charge balancing device (3) according to Claim 1 or 2, in which each of said AC/DC converters (300) includes an inductor connected in one of said conducting connections between the input of this AC/DC converter and its rectifier circuit.

4. Charge balancing device (3) according to any one of the preceding claims, in which the control circuit (5) is configured to determine which energy storage element (200) has the lowest voltage, and configured to control the power supply of an output by its AC/DC converter (360) only when it has been determined that the energy storage element (200) connected to this output has the lowest voltage.

5. Charge balancing device (3) according to Claims 3 and 4, in which the control circuit (5) determines the state of charge of each of said storage elements (200) on the basis of the power supply time of the output connected to each storage element, on the one hand, when the DC/AC converter (320) is controlled at constant power and, on the other hand, when this DC/AC converter (320) is controlled at the current source.

6. Charge balancing device (3) according to any one of the preceding claims, in which each of said AC/DC converters includes four rectifier elements and in which an output of the secondary (312) of said transformer (310) is connected as a bridge between the four rectifier elements.

7. Charge balancing device (3) according to any one of Claims 1 to 5, in which the secondary (312) of the transformer comprises a secondary winding at the midpoint for each of said AC/DC converters (300), and in which each of said AC/DC converters includes first and second rectifier elements (376) connected, on the one hand, to a terminal of their storage element and, on the other hand, to a respective terminal of their secondary winding, the midpoint of the secondary winding being connected to the other terminal of their storage element.

8. Charge balancing device (3) according to any one of the preceding claims, in which each of said AC/DC converters (300) includes a switch (373) controlled by said control circuit (5) in such a way as to connect selectively an output of this AC/DC converter (300) to its respective storage element.

9. Charge balancing device (3) according to any one of Claims 1 to 7, in which each of the AC/DC converters (300) includes a rectifier element and a relay controlled by said control circuit, said relay selectively connecting the secondary (312) of the transformer to said rectifier element.

10. Charge balancing device according to any one of the preceding claims, in which said inverter (330) is dimensioned for an input voltage lower than the voltage on the terminals of the electrical power storage device.
